(19) Europäisches Patentamt
European Patent Office
Office européen des brevets

(11) **EP 3 509 050 B1**

(12) **EUROPEAN PATENT SPECIFICATION**

(45) Date of publication and mention
of the grant of the patent:
**26.10.2022 Bulletin 2022/43**

(21) Application number: **17907023.0**

(22) Date of filing: **06.09.2017**

(51) International Patent Classification (IPC):
*G08G 1/0962* (2006.01)  *G08G 1/052* (2006.01)
*G08G 1/07* (2006.01)  *G08G 1/095* (2006.01)
*G08G 1/0967* (2006.01)

(52) Cooperative Patent Classification (CPC):
**G08G 1/052; G08G 1/0962;** G08G 1/07;
G08G 1/095; G08G 1/09623; G08G 1/096716;
G08G 1/096758; G08G 1/096783

(86) International application number:
**PCT/CN2017/100752**

(87) International publication number:
**WO 2018/196252 (01.11.2018 Gazette 2018/44)**

(54) **TRAFFIC LIGHT-BASED VEHICLE SPEED INDUCING METHOD AND SYSTEM, AND VEHICLE**

VERFAHREN UND SYSTEM MIT AMPELBASIERTER FAHRZEUGGESCHWINDIGKEITSVERANLASSUNG SOWIE FAHRZEUG

PROCÉDÉ ET SYSTÈME D'INDUCTION DE VITESSE DE VÉHICULE BASÉE SUR LES FEUX DE CIRCULATION, ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2017 CN 201710285524**

(43) Date of publication of application:
**10.07.2019 Bulletin 2019/28**

(73) Proprietor: **IE-Cheng Technology (Tianjin) Co., Ltd.
Tianjin 300382 (CN)**

(72) Inventor: **LI, Chun-Ming
Tianjin 300382 (CN)**

(74) Representative: **Adamson Jones
BioCity Nottingham
Pennyfoot Street
Nottingham NG1 1GF (GB)**

(56) References cited:
WO-A2-2016/055589    CN-A- 101 510 360
CN-A- 102 649 432    CN-A- 103 909 928
CN-A- 104 966 407    CN-A- 105 551 276
CN-A- 106 875 709    US-A1- 2010 088 002

## Description

The present disclosure claims the priority to the Chinese patent application no. 201710285524.3, filed with the Chinese Patent Office on April 27, 2017 and entitled "Traffic Light-based Vehicle Speed Induction Method and System, and Vehicle".

## Technical Field

The present disclosure relates to the technical field of traffic, and particularly to a vehicle speed induction method and system, and a vehicle.

## Background Art

At present, a vehicle dashboard displays the current vehicle speed in real time, and a vehicle driver can only adjust the vehicle speed according to the current road condition (for example, the vehicles in the current road section, whether there is an accident or not, etc.) and personal driving experience so as to avoid a red light as much as possible. However, since the condition of the traffic light at the traffic light junction on the road ahead is not known, adjustment of the vehicle speed can only be made at a place very close to the traffic light ahead, the adjustment time is short and the adjustment conditions are limited, easily resulting in vehicle stopping and congestion at the traffic light junction on the road. In addition, due to re-acceleration of the vehicle after the vehicle stopping, when the vehicle crosses the traffic light junction on the road, the speed is low, the time of crossing is long and the energy consumption is high.

CN 102 649 432 discloses a vehicle speed control method and a vehicle speed control system and belongs to the field of automobile control. The method comprises the following steps that: the distance from the current position of a vehicle to a traffic light expected to pass is obtained; the traffic light information of the traffic light expected to pass is obtained; and the current vehicle speed is controlled according to the distance and the traffic light information so that the traffic light is green when the vehicle reaches the traffic light expected to pass. The system comprises a distance obtaining module, a traffic light information obtaining module and a vehicle speed feedback module. The embodiment of the invention has the advantages that through the comprehensive processing on the traffic light information, the absolute position of the traffic light and the vehicle and parameters of the vehicle per se, the vehicle is automatically controlled, the vehicle speed regulation is realized, the condition of crowding at traffic light crossings is avoided to a certain degree, and the traffic condition is optimized.

CN105 551 276 discloses a road traffic vehicle speed induction method. The method is mainly and technically characterized in that an intersection information releasing module releases intersection information in real time; an intersection information obtaining module receives the intersection information in real time and transmits the intersection information to a core processing module; a vehicle positioning module obtains the speed and the position of a vehicle in real time and transmits the speed and the position to the core processing module; according to the intersection information and the vehicle position and the vehicle speed of the vehicle, the core processing module calculates the speed of the vehicle passing an intersection in a green light period, and the speed of the vehicle is induced. The method is reasonable in design, it is guaranteed that the vehicle reaches the intersection in the traffic signal green light period and quickly passes the intersection, it is avoided that the vehicle parks at the intersection during a red light period, average speed of the vehicle passing the intersection is greatly increased, more vehicles can pass in the limited green light time, and the go-through efficiency of the whole traffic intersection is effectively improved.

CN103 909 928 discloses a red light avoidance system. The red light avoidance system comprises a smart phone where a red light application program is installed and an automobile with a speed control module. The automobile automatically runs according to an optimum vehicle speed so as to avoid a red light. The red light avoidance system can save energy and reduce pollution and does not influence running safety. A universal device (such as the smart phone) rather than a customized device is adopted for the red light avoidance system to achieve the goal of red light avoidance. An existing traffic control system and an existing vehicle-mounted electronic device do not need to undergo too much modification. Therefore, the red light avoidance system is very low in hardware cost.

## Summary

An object of the present disclosure is to provide a vehicle speed induction method, which allows timely adjustment of the vehicle speed and avoids vehicle stopping at a traffic light junction on the road (i.e. a road junction where traffic lights are located).

In order to achieve the above object, the present disclosure provides a vehicle speed induction method as defined in the appended claim 1.

Optionally, the step of acquiring a position of a traffic light junction on the road ahead is specifically: determining the position of the traffic light junction on the road according to the GPS coordinates of the traffic light junction on the road.

According to the specific embodiments provided in the present disclosure, the present disclosure achieves the following technical effects:

In the vehicle speed induction method of the present disclosure, the distance between a vehicle and a traffic light junction on the road ahead is determined according to the position of the traffic light junction on the road and the current position of travelling of the vehicle, a plurality of effective time intervals of continued travelling of the vehicle is determined according to the time parameters of the traffic light and the current time of travelling of the vehicle; and a plurality of induction speed intervals of travelling of the vehicle are further determined according to the distance and the effective time interval, so that a driver can always cross the traffic light junction on the road during the green-light period when driving at a speed within the induction speed intervals, so as to avoid vehicle stopping and causing congestion at the traffic light junction on the road ahead.

An object of the present disclosure is to provide a vehicle speed induction system, which allows timely adjustment of the vehicle speed and avoids vehicle stopping at a traffic light junction on the road.

In order to achieve the above object, the present disclosure provides a vehicle speed induction system according to the appended claim 3.

An object of the present disclosure is to provide a vehicle, which allows timely adjustment of the vehicle speed and avoids vehicle stopping at a traffic light junction on the road.

In order to achieve the above object, the present disclosure provides a vehicle provided with the claimed vehicle speed induction system.

Compared with the prior art, the vehicle speed induction system and the vehicle of the present disclosure have the same advantageous effects as the vehicle speed induction method, which will not be described again herein.

**Brief Description of Drawings**

Below, the present disclosure is further described with reference to the drawings:

FIG. 1 is a flowchart of a vehicle speed induction method according to an embodiment of the present disclosure;

FIG. 2 illustrates an embodiment of displaying of a dashboard; and

FIG. 3 is a schematic structural diagram of a vehicle speed induction system according to an embodiment of the present disclosure.

Reference signs:

acquisition unit-1, distance determination unit-2, time determination unit-3, and speed determination unit-4.

**Detailed Description of Embodiments**

The technical solutions in the embodiments of the present disclosure will be specifically described below with reference to the drawings of the embodiments of the present disclosure. Obviously, the embodiments described are only some of the embodiments of the present disclosure, rather than all of the embodiments of the present disclosure. All the other embodiments that are obtained by a person of ordinary skills in the art on the basis of the embodiments of the present disclosure without inventive effort shall be covered by the protection scope of the present disclosure.

A traffic light includes a red light, a yellow light and a green light. To stop at a red light and go at a green light is the rule that a vehicle must obey when coming to a traffic light junction on the road. A vehicle has only two states, i.e., running and stopping, when arriving at a traffic light junction on the road. In the present disclosure, the concept of traffic light junction on the road is expanded to a road section, the information of traffic light is converted into different speed intervals and a prompt is given by means of a dashboard, etc., so that a vehicle arrives at a traffic light junction on the road during the green-light period through the speed adjustment during travelling, so as to avoid stopping at the traffic light junction on the road.

An object of the present disclosure is to provide a vehicle speed induction method, in which the distance between a vehicle and a traffic light junction on the road ahead is determined according to the position of the traffic light junction on the road and the current position of travelling of the vehicle, a plurality of effective time intervals of continued travelling of the vehicle are determined according to the time parameters of the traffic light and the current time of travelling of the vehicle; and a plurality of induction speed intervals of travelling of the vehicle are further determined according to the distance and the effective time intervals, so that a driver can always cross the traffic light junction on the road during the green-light period when driving at a speed within the induction speed intervals, so as to avoid vehicle stopping and causing congestion at the traffic light junction on the road ahead; moreover, since vehicle stopping is avoided, the energy consumption of the vehicle is reduced.

In order to make it easier to understand the objects, features and advantages of the present disclosure, detailed description is made on the present disclosure below in connection with the embodiments with reference to the accompanying drawings.

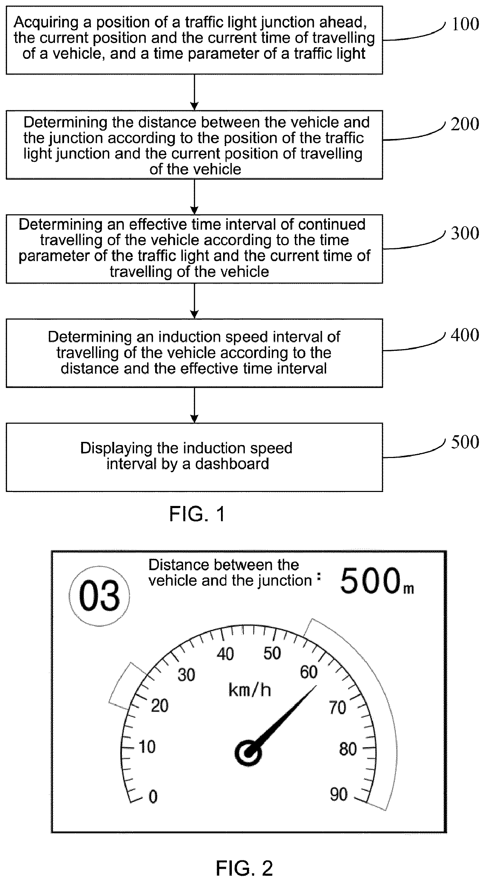

As shown in FIG. 1, the vehicle speed induction method according to the present disclosure comprises:

step 100: acquiring a position of a traffic light junction on the road ahead, a current position and a current time of travelling of a vehicle, and time parameters of a traffic light;

step 200: determining the distance between the vehicle and the traffic light junction on the road according to the position of the traffic light junction on the road and the current position of travelling of the vehicle;

step 300: determining a plurality of effective time intervals of continued travelling of the vehicle according to the time parameters of the traffic light and the current time of travelling of the vehicle;

step 400: determining a plurality of induction speed intervals of travelling of the vehicle according to the distance and the effective time intervals, wherein with a speed within any of the induction speed intervals, a driver can be enabled to cross the traffic light junction on the road during the green-light period; and

step 500: displaying the induction speed intervals by a dashboard. Preferably, the induction speed intervals are displayed in green.

In the above, the acquiring a position of a traffic light junction on the road ahead is specifically: determining the position of the traffic light junction on the road according to the GPS coordinates of the traffic light junction on the road.

In step 200, the determining the distance between the vehicle and the traffic light junction on the road according to the position of the traffic light junction on the road and the current position of travelling of the vehicle is specifically calculating the distance between the vehicle and the traffic light junction on the road ahead according to the GPS coordinates of the traffic light junction on the road, and the current position coordinates of the vehicle.

The time parameters include a time period of the traffic light, the starting time of the time period, a green-light period, a yellow-light period and a red-light period in the time period.

In step 300, the determining a plurality of effective time intervals of continued travelling of the vehicle according to the time parameters of the traffic light and the current time of travelling of the vehicle specifically comprises:

determining a time remainder according to the following formula:

the time remainder = (the current time − the starting time)% the time period, where % represents a remainder operation;

determining an initial value of the starting time of continued travelling of the vehicle according to the green-light period, the yellow-light period and the red-light period within the time period and the time remainder:

wherein if the time remainder is smaller than the green-light period, the green light at the traffic light junction on the road is currently lit, and the initial value of the starting time = the green-light period - the time remainder;

if the time remainder is greater than the green-light period and smaller than the sum of the green-light period and the yellow-light period, the yellow light at the traffic light junction on the road is currently lit, and the initial value of the starting time = the green-light period + the yellow-light period - the time remainder;

if the time remainder is greater than the sum of the green-light period and the yellow-light period, the red light at the traffic light junction on the road is currently lit, and the initial value of the starting time = the time period - the time remainder;

determining an initial value of the ending time of continued travelling of the vehicle according to the following formula:

the initial value of the ending time = the initial value of the starting time + the green-light period;

determining a plurality of effective time intervals [$T_1$, $T_2$] according to the following formula:

$$\begin{cases} T_1 = \text{the initial value of the starting time} + nT \\ T_2 = \text{the initial value of the ending time} + nT, \end{cases}$$

where $T_1$ represents the starting time in one effective time interval of the continued travelling of the vehicle, $T_2$ represents the ending time in one effective time interval of the continued travelling of the vehicle, T represents the value of one time period of the traffic light, and n is an integer greater than or equal to 0.

Neither the yellow light nor the red light is taken into consideration in the case of the vehicle crossing the traffic light junction on the road ahead. When a red light or a yellow light is on at the traffic light junction on the road ahead, it is necessary to find the green-light starting time and the green-light ending time, namely the initial value of the starting time and the initial value of the ending time, of the next time period.

In step 400, the determining a plurality of induction speed intervals of travelling of the vehicle according to the distance and the effective time intervals specifically comprises:

determining multiple pairs of extreme speed values $v_i$ according to the following formula: $v_i = \dfrac{S}{T_i}$ , where S represents the distance between the vehicle and the traffic light junction on the road, i = 1, 2;

determining a plurality of induction speed intervals [$V_2$, $V_1$] according to the following formula:

$$\begin{cases} V_1 = \begin{cases} \text{the maximum speed limit of the vehicle,} & v_1 \geqslant \text{the maximum speed limit of the vehicle} \\ v_1, & v_1 < \text{the maximum speed limit of the vehicle} \end{cases} \\ V_2 = \begin{cases} \text{the minimum speed limit of the vehicle,} & v_2 \leqslant \text{the minimum speed limit of the vehicle} \\ v_2, & v_2 > \text{the minimum speed limit of the vehicle} \end{cases} \end{cases}$$

Detailed description is made below in connection with one specific embodiment (in which the maximum speed limit of the vehicle is 90 km/h, and the minimum speed limit is 15 km/h).

For example, according to the position of the traffic light junction on the road ahead and the current position of travelling of the vehicle, it is determined that the distance between the vehicle and the traffic light junction on the road is 500 m; the starting time of the time period of the traffic light is ti = 2017-04-7, 15:00:34, the green-light period is g = 30s, the yellow-light period is y = 6s, the red-light period is r = 36s, the time period is T = 72s, the current time is: $t_2$ = 2017-04-07, 15:09:20.

The time remainder is $d = (t_2 - t_1)\% \, T = 69$.

Since d > g + y, the traffic light ahead is red, and at this time, the initial value $T_{1initial}$ of the starting time and the initial value $T_{2initial}$ of the ending time of the next time period are calculated:

$$T_{1initial} = T - d = 3s, \quad T_{2initial} = T_{1initial} + g = 33s,$$

and a plurality of effective time intervals [$T_1$, $T_2$] are:

$$\begin{cases} T_1 = T_{1initial} + nT \\ T_2 = T_{2initial} + nT, \end{cases}$$

where $T_1$ represents the starting time in one effective time interval of the continued travelling of the vehicle, $T_2$ represents the ending time in one effective time interval of the continued travelling of the vehicle, T represents the value of one time period of the traffic light, and n is an integer greater than or equal to 0.

When n = 0, $[T_1, T_2]$ = [3,33],

$$v_1 = \frac{s}{T_1} = 600 km/h$$

, since $v_1 > 90$ *km/h,* then $V_1 = 90$ *km/h;*

$$v_2 = \frac{s}{T_2} = 55 km/h$$

, $v_2 > 15$ *km/h,* then $V_2 = 55$ *km/h,* therefore, the induction speed interval at this time is [55, 90] (km/h).

When n = 1, $[T_1, T_2]$ = [75, 105],

$$v_1 = \frac{s}{T_1} = 24 km/h$$

, $v_1 < 90$ *km/h,* then $V_1 = 24$ *km/h;*

$$v_2 = \frac{s}{T_2} = 17 km/h$$

, $v_2 > 15$ *km/h,* then $V_2 = 17$ *km/h,* therefore, the induction speed interval at this time is [17, 24] (km/h).

Calculation is continued for the starting time and the ending time in other time periods, and the corresponding extreme speed value $v_i$, until the extreme speed value $v_i$ does not meet the speed limit condition ($v_1 < 90$ *km/h,* $v_2 > 15$ *km/h).*

In this embodiment, there are a total of two induction speed intervals $[V_2, V_1]$, as shown in FIG. 2, the two induction speed intervals are respectively [17, 24] (km/h) and [55, 90] (km/h).

The driver of the vehicle can drive at any speed in the two induction speed intervals, and can always cross the traffic light junction on the road ahead when the traffic light is green, thereby avoiding vehicle stopping and causing congestion at the junction on the road.

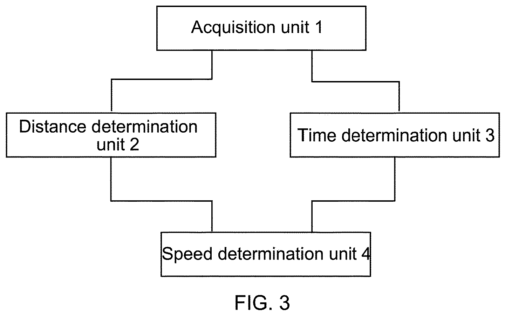

The present disclosure further provides a vehicle speed induction system, which enables a driver to adjust the vehicle speed in a timely manner according to the actual conditions of the road, and control the vehicle speed in the induction speed intervals when approaching the traffic light junction on the road, so as to cross the traffic light junction on the road during the green-light period. As shown in FIG. 3, the vehicle speed induction system of the present disclosure comprises an acquisition unit 1, a distance determination unit 2, a time determination unit 3, and a speed determination unit 4.

In the above, the acquisition unit 1 acquires a position of a traffic light junction on the road ahead, the current position and the current time of travelling of a vehicle, and time parameters of a traffic light; the distance determination unit 2 determines the distance between the vehicle and the traffic light junction on the road according to the position of the traffic light junction on the road and the current position of travelling of the vehicle; the time determination unit 3 determines a plurality of effective time intervals of continued travelling of the vehicle according to the time parameters of the traffic light and the current time of travelling of the vehicle; and the speed determination unit 4 determines a plurality of induction speed intervals of travelling of the vehicle according to the distance and the effective time intervals, wherein with a speed within any of the induction speed intervals, a driver can be enabled to cross the traffic light junction on the road during the green-light period.

The vehicle speed induction system of the present disclosure can be provided on a vehicle to provide a reference for the driver of the vehicle in real time; or can be provided as a junction sign and placed at a fixed position near a traffic light junction on the road to provide a reference for the passing vehicles.

For example, the contents displayed on a vehicle dashboard is duplicated to an LED display screen installed on the roadside or above the lane, prompting the passing vehicles to travel, when passing under the display screen, at a constant speed in the induction speed intervals to the traffic light junction on the road, which can ensure that the vehicles cross the junction on the road during the green-light period.

Further, the present disclosure also provides a vehicle equipped with the vehicle speed induction system as described above. Optionally, the vehicle of the present disclosure is further provided with a dashboard connected to the vehicle speed induction system and used for displaying a plurality of induction speed intervals of the vehicle speed induction system.

Compared with the prior art, the vehicle speed induction system and the vehicle of the present disclosure have the same advantageous effects as the vehicle speed induction method, which will not be described again herein.

The embodiments of the present disclosure are described in detail with reference to the drawings. However, the present disclosure is not limited to the embodiments described above. Various changes can be made within the range of the knowledge of a person of ordinary skills in the art without departing from the scope of the appended claims.

**Claims**

1. A vehicle speed induction method, comprising the steps of:

Acquiring, by an acquisition unit, a position of a traffic light junction on a road ahead, a current position and current time of travelling of a vehicle, and time parameters of a traffic light, wherein the time parameters comprise , a green-light period, a yellow-light period, a red-light period, a time period of the traffic light being the sum of the green-light period, the yellow-light period and the red-light period, and a starting time of the time period;
Determining, by a distance determining unit, a distance between the vehicle and the traffic light junction on the road according to the position of the traffic light junction on the road and the current position of travelling of the vehicle;
Determining, by a time determination unit, a plurality of effective time intervals of continued travelling of the vehicle according to the time parameters of the traffic light and the current time of travelling of the vehicle; and
Determining, by a speed determination unit, a plurality of induction speed intervals of travelling of the vehicle according to the distance and the effective time intervals, wherein with a speed within any of the induction speed intervals, a driver can be enabled to cross the traffic light junction on the road during a green-light period,
wherein the step of determining a plurality of effective time intervals of continued travelling of the vehicle according to the time parameters of the traffic light and the current time of travelling of the vehicle comprises:

determining a time remainder according to a formula as follows:

$$\text{the time remainder} = (\text{the current time} - \text{the starting time})\% \text{ the time period, where \% represents a remainder operation;}$$

determining an initial value of the starting time of continued travelling of the vehicle according to the green-light period, the yellow-light period and the red-light period within the time period and the time remainder: wherein

if the time remainder is smaller than the green-light period, then

the green light at the traffic light junction on the road is currently lit, and
the initial value of the starting time = the green-light period - the time remainder;

if the time remainder is greater than the green-light period and smaller than sum of the green-light period and the yellow-light period, then

the yellow light at the traffic light junction on the road is currently lit, and
the initial value of the starting time = the green-light period + the yellow-light period - the time remainder;

if the time remainder is greater than the sum of the green-light period and the yellow-light period, then

the red light at the traffic light junction on the road is currently lit, and
the initial value of the starting time = the time period - the time remainder;

determining an initial value of ending time of continued travelling of the vehicle according to a formula as follows:

$$\text{the initial value of the ending time} = \text{the initial value of the starting time} + \text{the green-light period;}$$

determining a plurality of effective time intervals $[T_1, T_2]$ according to a formula as follows:

$$\begin{cases} T_1 = \text{the initial value of the starting time} + nT \\ T_2 = \text{the initial value of the ending time} + nT, \end{cases}$$

where $T_1$ represents the starting time in one effective time interval of the continued travelling of the vehicle, $T_2$ represents ending time in one effective time interval of the continued travelling of the vehicle, T represents a value of one time period of the traffic light, and n is an integer greater than or equal to 0, wherein the step of determining a plurality of induction speed intervals of travelling of the vehicle according to the distance and the effective time intervals specifically comprises:

determining multiple pairs of extreme speed values $v_i$ according to a formula as follows:

$$v_i = \frac{S}{T_i}$$

where S represents distance between the vehicle and the traffic light junction on the road, i = 1, 2; determining a plurality of induction speed intervals [$V_2$, $V_1$] according to a formula as follows:

$$\begin{cases} V_1 = \begin{cases} \text{the maximum speed limit of the vehicle,} & v_1 \geq \text{the maximum speed limit of the vehicle} \\ v_1, & v_1 < \text{the maximum speed limit of the vehicle} \end{cases} \\ V_2 = \begin{cases} \text{the minimum speed limit of the vehicle,} & v_2 \leq \text{the minimum speed limit of the vehicle} \\ v_2, & v_2 > \text{the minimum speed limit of the vehicle} \end{cases} \end{cases}$$

displaying, on a dashboard of the vehicle connected to the speed determination unit, the plurality of induction speed intervals, in green, to provide a reference for the driver of the vehicle and a distance from the vehicle to the traffic light junction on the road ahead,
and/or
displaying, on a LED display screen connected to the speed determination unit, the plurality of induction speed intervals in a junction sign placed at a fixed position near a traffic light junction on the road to provide a reference for the passing vehicles.

2. The vehicle speed induction method according to claim 1, wherein the step of acquiring a position of a traffic light junction on the road ahead is of: determining a position of the traffic light junction on the road according to the GPS coordinates of the traffic light junction on the road.

3. A vehicle speed induction system adapted to perform the vehicle speed induction method according to claim 1 or 2, comprising:

an acquisition unit for acquiring a position of a traffic light junction on the road ahead, a current position and current time of travelling of a vehicle, and time parameters of a traffic light;
a distance determination unit for determining a distance between the vehicle and the traffic light junction on the road according to the position of the traffic light junction on the road and the current position of travelling of the vehicle;
a time determination unit for determining a plurality of effective time intervals of continued travelling of the vehicle according to the time parameters of the traffic light and the current time of travelling of the vehicle; and
a speed determination unit for determining a plurality of induction speed intervals of travelling of the vehicle according to the distance and the effective time intervals, wherein with a speed within any of the induction speed intervals, a driver can be enabled to cross the traffic light junction on the road during the green-light period;
a dashboard of the vehicle, connected to the speed determination unit, displaying the plurality of induction speed intervals to provide a reference for the driver of the vehicle and a distance from the vehicle to the traffic light junction on the road ahead;
and/or
a LED display screen connected to the speed determination unit, displaying the plurality of induction speed intervals in a junction sign placed at a fixed position near a traffic light junction on the road to provide a reference for the passing vehicles.

4. A vehicle provided with the vehicle speed induction system and the dashboard according to claim 3.


**Patentansprüche**

1. Fahrzeuggeschwindigkeitsinduktionsverfahren, umfassend die Schritte:

Erfassen, durch eine Erfassungseinheit, einer Position einer Verkehrsampelkreuzung auf einer vorausliegenden Straße, einer aktuellen Position und aktuellen Fahrtzeit eines Fahrzeugs und Zeitparametern einer Verkehrsampel, wobei die Zeitparameter eine Grünlichtzeitdauer, eine Gelblichtzeitdauer, eine Rotlichtzeitdauer, eine Zeitdauer der Verkehrsampel, die die Summe der Grünlichtzeitdauer, der Gelblichtzeitdauer und der Rotlichtzeitdauer ist, und eine Startzeit der Zeitdauer umfassen;
Bestimmen, durch eine Entfernungsbestimmungseinheit, einer Entfernung zwischen dem Fahrzeug und der Verkehrsampelkreuzung auf der Straße gemäß der Position der Verkehrsampelkreuzung auf der Straße und der aktuellen Fahrposition des Fahrzeugs;
Bestimmen, durch eine Zeitbestimmungseinheit, einer Vielzahl von effektiven Zeitintervallen einer fortgesetzten Fahrt des Fahrzeugs gemäß den Zeitparametern der Verkehrsampel und der aktuellen Fahrtzeit des Fahrzeugs; und
Bestimmen, durch eine Geschwindigkeitsbestimmungseinheit, einer Vielzahl von Induktionsgeschwindigkeitsintervallen einer Fahrt des Fahrzeugs gemäß der Entfernung und den effektiven Zeitintervallen, wobei, bei einer Geschwindigkeit innerhalb eines beliebigen der Induktionsgeschwindigkeitsintervalle, es einem Fahrer ermöglicht werden kann, die Verkehrsampelkreuzung auf der Straße während einer Grünlichtzeitdauer zu überqueren, wobei der Schritt des Bestimmens einer Vielzahl effektiver Zeitintervalle einer fortgesetzten Fahrt des Fahrzeugs gemäß den Zeitparametern der Verkehrsampel und der aktuellen Fahrtzeit des Fahrzeugs Folgendes umfasst:

Bestimmen eines Zeitrests gemäß einer Formel wie folgt:

$$\text{der Zeitrest} = (\text{die aktuelle Zeit} - \text{die Startzeit}) \% \text{ der Zeitdauer, wobei } \% \text{ eine Restoperation darstellt;}$$

Bestimmen eines Anfangswerts der Startzeit der fortgesetzten Fahrt des Fahrzeugs gemäß der Grünlichtzeitdauer, der Gelblichtzeitdauer und der Rotlichtzeitdauer innerhalb der Zeitdauer und des Zeitrests: wobei

wenn der Zeitrest kleiner als die Grünlichtzeitdauer ist, dann
das grüne Licht an der Verkehrsampelkreuzung auf der Straße aktuell erleuchtet ist, und
der Anfangswert der Startzeit = der Grünlichtzeitraum - der Zeitrest;
wenn der Zeitrest größer als die Grünlichtzeitdauer und kleiner als die Summe aus der Grünlichtzeitdauer und der Gelblichtzeitdauer ist, dann
das gelbe Licht an der Verkehrsampelkreuzung auf der Straße aktuell erleuchtet ist, und

$$\text{der Anfangswert der Startzeit} = \text{die Grünlichtzeitdauer} + \text{die Gelblichtzeitdauer} - \text{der Zeitrest;}$$

wenn der Zeitrest größer ist als die Summe der Grünlichtzeitdauer und der Gelblichtzeitdauer, dann

das rote Licht an der Verkehrsampelkreuzung auf der Straße aktuell erleuchtet ist, und
der Anfangswert der Startzeit = die Zeitdauer - der Zeitrest;
Bestimmen eines Anfangswerts einer Endzeit der fortgesetzten Fahrt des Fahrzeugs gemäß einer Formel wie folgt:

der Anfangswert der Endzeit = der Anfangswert der Startzeit + die Grünlichtzeitdauer;
Bestimmen einer Vielzahl effektiver Zeitintervalle [$T_1$, $T_2$] gemäß einer Formel wie folgt:

$$\begin{cases} T_1 = \text{der Anfangswert der Startzeit} + \mathrm{n}T \\ T_2 = \text{der Anfangswert der Endzeit} + \mathrm{n}T, \end{cases}$$

wobei $T_1$ die Startzeit in einem effektiven Zeitintervall der fortgesetzten Fahrt des Fahrzeugs darstellt, $T_2$ die Endzeit in einem effektiven Zeitintervall der fortgesetzten Fahrt des Fahrzeugs darstellt, T einen Wert einer Zeitdauer der Verkehrsampel darstellt, und n eine ganze Zahl größer oder gleich 0 ist,
wobei der Schritt des Bestimmens einer Vielzahl von Induktionsgeschwindigkeitsintervallen einer Fahrt des Fahrzeugs gemäß der Entfernung und den effektiven Zeitintervallen insbesondere Folgendes umfasst:
Bestimmen mehrerer Paare von extremen Geschwindigkeitswerten $v_i$ gemäß einer Formel wie folgt:

$$v_i = \frac{\mathrm{S}}{\mathrm{T}_i}$$

wobei S die Entfernung zwischen dem Fahrzeug und der Verkehrsampelkreuzung auf der Straße darstellt, i = 1, 2;
Bestimmen einer Vielzahl von Induktionsgeschwindigkeitsintervallen [$V_2$, $V_1$] gemäß einer Formel wie folgt:

$$V_1 = \begin{cases} \text{die maximale Geschwindigkeitsgrenze des Fahrzeugs,} & v_1 \geq \text{die maximale Geschwindigkeitsgrenze des Fahrzeugs} \\ v_1, & v_1 < \text{die maximale Geschwindigkeitsgrenze des Fahrzeugs} \end{cases}$$

$$V_2 = \begin{cases} \text{die minimale Geschwindigkeitsgrenze des Fahrzeugs,} & v_2 \leq \text{die minimale Geschwindigkeitsgrenze des Fahrzeugs} \\ v_2, & v_2 > \text{die minimale Geschwindigkeitsgrenze des Fahrzeugs} \end{cases}$$

Anzeigen, auf einem Armaturenbrett des Fahrzeugs, das mit der Geschwindigkeitsbestimmungseinheit verbunden ist, der Vielzahl von Induktionsgeschwindigkeitsintervallen, in Grün, um eine Referenz für den Fahrer des Fahrzeugs bereitzustellen, und einer Entfernung von dem Fahrzeug zu der Verkehrsampelkreuzung auf der vorausliegenden Straße,
und/oder
Anzeigen, auf einem LED-Anzeigebildschirm, der mit der Geschwindigkeitsbestimmungseinheit verbunden ist, der Vielzahl von Induktionsgeschwindigkeitsintervallen in einem Kreuzungsschild, das an einer festen Position nahe einer Verkehrsampelkreuzung auf der Straße platziert ist, um eine Referenz für die vorbeifahrenden Fahrzeuge bereitzustellen.

**2.** Fahrzeuggeschwindigkeitsinduktionsverfahren nach Anspruch 1, wobei der Schritt des Erfassens einer Position einer Verkehrsampelkreuzung auf der vorausliegenden Straße der folgende ist: Bestimmen einer Position der Verkehrsampelkreuzung auf der Straße gemäß den GPS-Koordinaten der Verkehrsampelkreuzung auf der Straße.

**3.** Fahrzeuggeschwindigkeitsinduktionssystem, das dafür ausgelegt ist, das Fahrzeuggeschwindigkeitsinduktionsverfahren nach Anspruch 1 oder 2 durchzuführen, umfassend:

eine Erfassungseinheit zum Erfassen einer Position einer Verkehrsampelkreuzung auf der vorausliegenden Straße, einer aktuellen Position und aktuellen Fahrtzeit eines Fahrzeugs und Zeitparametern einer Verkehrsampel;

eine Entfernungsbestimmungseinheit zum Bestimmen einer Entfernung zwischen dem Fahrzeug und der Verkehrsampelkreuzung auf der Straße gemäß der Position der Verkehrsampelkreuzung auf der Straße und der aktuellen Fahrposition des Fahrzeugs;

eine Zeitbestimmungseinheit zum Bestimmen einer Vielzahl effektiver Zeitintervalle einer fortgesetzten Fahrt des Fahrzeugs gemäß den Zeitparametern der Verkehrsampel und der aktuellen Fahrtzeit des Fahrzeugs; und

eine Geschwindigkeitsbestimmungseinheit zum Bestimmen einer Vielzahl von Induktionsgeschwindigkeitsintervallen einer Fahrt des Fahrzeugs gemäß der Entfernung und den effektiven Zeitintervallen, wobei, bei einer Geschwindigkeit innerhalb eines beliebigen der Induktionsgeschwindigkeitsintervalle, es einem Fahrer ermöglicht werden kann, die Verkehrsampelkreuzung auf der Straße während der Grünlichtzeitdauer zu überqueren,

ein Armaturenbrett des Fahrzeugs, das mit der Geschwindigkeitsbestimmungseinheit verbunden ist und die Vielzahl von Induktionsgeschwindigkeitsintervallen, in Grün, um eine Referenz für den Fahrer des Fahrzeugs bereitzustellen, und eine Entfernung von dem Fahrzeug zu der Verkehrsampelkreuzung auf der vorausliegenden Straße anzeigt;

und/oder

einen LED-Anzeigebildschirm, der mit der Geschwindigkeitsbestimmungseinheit verbunden ist und die Vielzahl von Induktionsgeschwindigkeitsintervallen in einem Kreuzungsschild, das an einer festen Position nahe einer Verkehrsampelkreuzung auf der Straße platziert ist, anzeigt, um eine Referenz für die vorbeifahrenden Fahrzeuge bereitzustellen.

**4.** Fahrzeug, das mit dem Fahrzeuggeschwindigkeitsinduktionssystem und dem Armaturenbrett nach Anspruch 3 versehen ist.

**Revendications**

**1.** Procédé d'induction de vitesse de véhicule, comprenant les étapes de :

acquisition, par une unité d'acquisition, de la position d'une intersection à feux de circulation sur une route en amont, d'une position courante et d'un temps de déplacement courant d'un véhicule, et des paramètres de temps d'un feu de circulation, lesdits paramètres de temps comprenant une période de feu vert, une période de feu jaune, une période de feu rouge, la période de temps du feu de circulation étant la somme de la période de feu vert, de la période de feu jaune et de la période de feu rouge, et une heure de début de la période de temps ;

détermination, par une unité de détermination de distance, de la distance entre le véhicule et l'intersection à feux de circulation sur la route selon la position de l'intersection à feux de circulation sur la route et la position courante de déplacement du véhicule ;

détermination, par une unité de détermination de temps, d'une pluralité d'intervalles de temps effectifs de déplacement continu du véhicule en fonction des paramètres de temps du feu de circulation et du temps de déplacement courant du véhicule ; et

détermination, par une unité de détermination de vitesse, d'une pluralité d'intervalles de vitesse d'induction de déplacement du véhicule en fonction de la distance et des intervalles de temps effectifs, avec une vitesse comprise dans l'un quelconque des intervalles de vitesse d'induction un conducteur pouvant être autorisé à traverser l'intersection à feux de circulation sur la route pendant une période de feu vert,

ladite étape de détermination d'une pluralité d'intervalles de temps effectifs de déplacement continu du véhicule en fonction des paramètres de temps du feu de circulation et du temps de déplacement courant du véhicule comprenant :

la détermination d'un temps restant conformément à la formule suivante :

$$\text{temps} \quad \text{restant} = (\text{heure courante - heure de début}) \,\%\, \text{période de temps,} \quad \text{où } \% \quad \text{représente}$$

une opération de reste ;

la détermination d'une valeur initiale de l'heure de début de déplacement continu du véhicule en fonction de la période de feu vert, de la période de feu jaune et de la période de feu rouge dans la période de temps et du temps restant :

dans lequel

si le temps restant est plus petit que la période de feu vert, alors
le feu vert à l'intersection à feux de circulation sur la route est couramment allumé, et

$$\text{valeur initiale de l'heure de début} = \text{période de feu vert} - \text{temps restant ;}$$

si le temps restant est plus grand que la période de feu vert et inférieur à la somme de la période de feu vert et de la période de feu jaune, alors

le feu jaune à l'intersection à feux de circulation sur la route est couramment allumé, et
valeur initiale de l'heure de début = période de feu vert + période de feu jaune - temps restant ;

si le temps restant est plus grand que la somme de la période de feu vert et de la période de feu jaune, alors

le feu rouge à l'intersection à feux de circulation sur la route est couramment allumé, et
valeur initiale de l'heure de début = période de temps - temps restant ;

la détermination d'une valeur initiale d'heure de fin de déplacement continu du véhicule conformément à la formule suivante :

valeur initiale de l'heure de fin = valeur initiale de l'heure de début + période de feu vert ;
la détermination d'une pluralité d'intervalles de temps effectifs $[T_1, T_2]$ conformément à la formule suivante :

$$\begin{cases} T_1 = \text{Valeur initiale de l'heure de début} + nT \\ T_2 = \text{Valeur initiale de l'heure de fin} + nT, \end{cases}$$

où $T_1$ représente l'heure de début dans un intervalle de temps effectif de déplacement continu du véhicule, $T_2$ représente l'heure de fin dans un intervalle de temps effectif du déplacement continu du véhicule, T représente une valeur d'une période de temps du feu de circulation, et n est un entier supérieur ou égal à 0,
ladite étape de détermination d'une pluralité d'intervalles de vitesse d'induction de déplacement du véhicule en fonction de la distance et des intervalles de temps effectifs comprenant spécifiquement :
la détermination de plusieurs paires de valeurs de vitesse extrêmes $v_i$ conformément à la formule suivante :

$$v_i = \frac{S}{T_i}$$

où S représente la distance entre le véhicule et l'intersection à feux de circulation sur la route, $i = 1, 2$ ;
la détermination d'une pluralité d'intervalles de vitesse d'induction $[V_2, V_1]$ conformément à la formule suivante :

$$V_1 = \begin{cases} \text{limite de vitesse maximale du véhicule} & v_1 \geq \text{limite de vitesse maximale du véhicule} \\[2em] v_1, & v_1 < \text{limite de vitesse maximale du véhicule} \end{cases}$$

$$V_2 = \begin{cases} \text{limite de vitesse minimale du véhicule} & v_2 \leq \text{limite de vitesse minimale du véhicule} \\[2em] v_2, & v_2 > \text{limite de vitesse minimale du véhicule} \end{cases}$$

l'affichage, sur un tableau de bord du véhicule relié à l'unité de détermination de vitesse, de la pluralité d'intervalles de vitesse d'induction, en vert, pour fournir une référence au conducteur du véhicule et une distance du véhicule à l'intersection à feux de circulation sur la route en amont, et/ou l'affichage, sur un écran d'affichage à LED relié à l'unité de détermination de vitesse, de la pluralité d'intervalles de vitesse d'induction dans un panneau d'intersection placé au niveau d'une position fixe à proximité d'une intersection à feux de circulation sur la route pour fournir une référence aux véhicules qui passent.

2. Procédé d'induction de vitesse de véhicule selon la revendication 1, ladite étape d'acquisition de la position d'une intersection à feux de circulation sur la route en amont consistant à : déterminer la position de l'intersection à feux de circulation sur la route selon les coordonnées GPS de l'intersection à feux de circulation sur la route.

3. Système d'induction de vitesse de véhicule conçu pour exécuter le procédé d'induction de vitesse de véhicule selon la revendication 1 ou 2, comprenant :

une unité d'acquisition permettant d'acquérir la position d'une intersection à feux de circulation sur la route en amont, une position courante et un temps de déplacement courant d'un véhicule, et des paramètres de temps d'un feu de circulation ;
une unité de détermination de distance pour déterminer une distance entre le véhicule et l'intersection à feux de circulation sur la route en fonction de la position de l'intersection à feux de circulation sur la route et de la position courante de déplacement du véhicule ;
une unité de détermination de temps permettant de déterminer une pluralité d'intervalles de temps effectifs de déplacement continu du véhicule en fonction des paramètres de temps du feu de circulation et du temps de déplacement courant du véhicule ; et
une unité de détermination de vitesse permettant de déterminer une pluralité d'intervalles de vitesse d'induction de déplacement du véhicule en fonction de la distance et des intervalles de temps effectifs, avec une vitesse comprise dans l'un quelconque des intervalles de vitesse d'induction un conducteur pouvant être autorisé à traverser l'intersection à feux de circulation sur la route pendant la période de feu vert ;
un tableau de bord du véhicule, relié à l'unité de détermination de vitesse, affichant la pluralité d'intervalles de vitesse d'induction pour fournir une référence au conducteur du véhicule et la distance du véhicule à l'intersection à feux de circulation sur la route en amont ; et/ou
un écran d'affichage à LED relié à l'unité de détermination de vitesse, affichant la pluralité d'intervalles de vitesse d'induction dans un panneau d'intersection placé au niveau d'une position fixe à proximité d'une intersection à feux de circulation sur la route pour fournir une référence aux véhicules qui passent.

4. Véhicule équipé du système d'induction de vitesse de véhicule et du tableau de bord selon la revendication 3.

Acquiring a position of a traffic light junction ahead, the current position and the current time of travelling of a vehicle, and a time parameter of a traffic light ⟋ 100

↓

Determining the distance between the vehicle and the junction according to the position of the traffic light junction and the current position of travelling of the vehicle ⟋ 200

↓

Determining an effective time interval of continued travelling of the vehicle according to the time parameter of the traffic light and the current time of travelling of the vehicle ⟋ 300

↓

Determining an induction speed interval of travelling of the vehicle according to the distance and the effective time interval ⟋ 400

↓

Displaying the induction speed interval by a dashboard ⟋ 500

## FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710285524
- CN 102649432
- CN 105551276
- CN 103909928